# DEMANDE DE BREVET EUROPEEN

(11) **EP 1 816 384 A1**
(43) Date de publication de la demande: **08.08.2007**
(21) Numéro de dépôt: 07300759.3
(22) Date de dépôt: 01.02.2007
(51) Int. Cl.: F16L 37/088, F16L 21/035, F16L 21/08, E21B 17/046, E21B 17/08

(54) **Raccord de tube, notamment de tubes pour colonne d'exhaure de forage**

(30) Priorité: 03.02.2006 FR 0650395
(71) Demandeur: Hydro Assistance, 40180 Hinx sur Adour (FR)
(72) Inventeur: Dangoumau, Serge, 40380, Poyartin (FR); Beaudier, François, 40380, Nousse (FR)
(74) Mandataire: Fantin, Laurent

(57) **Abrégé**

L'objet de l'invention est un raccord (14) de tubes (12), notamment dans une colonne d'exhaure, comportant une partie mâle et une partie femelle prévue pour recevoir la partie mâle.
Lesdites parties mâle et femelle disposent d'au moins deux zones (20,22) et (32,34) respectivement, de diamètres (D1,D2) et (D1',D2'), telsque (D1) est identique à (D1') au jeu d'introduction près, (D2) est identique à (D2') au jeu d'introduction près, avec (D2) supérieur à (D1).

## Description

La présente invention concerne un raccord de tube, notamment de tubes pour colonne d'exhaure de forage.

Les colonnes d'exhaure de forage sont constituées de tubes qui sont raccordés les uns aux autres pour atteindre la profondeur souhaitée.

Ces tubes sont liés les uns aux autres par des raccords qui ont un double rôle celui d'assurer la reprise des efforts mécaniques et celui d'assurer l'étanchéité au droit du raccord.

On connaît les raccords filetés et les raccords à brides qui restent délicats de mise en oeuvre et on leur préfère des raccord à emboîtement.

De tels raccords comprennent de façon connue une partie mâle et une partie femelle chacune liée à un tube de longueur donné.

La liaison consiste à emboîter la partie mâle dans la partie femelle.

L'étanchéité est assurée par des joints toriques positionnés dans des gorges ménagées sur la surface externe de la partie mâle et coopérant avec la surface périphérique interne plane, à savoir la paroi intérieure de la partie femelle.

La liaison mécanique est assurée par des joncs portés par des gorges également ménagés à la périphérie de la partie mâle et coopérant avec des logements ménagées à la périphérie intérieure de la partie femelle. Ces joncs sont généralement en polyéthylène ou en acier inoxydable suivant les propriétés recherchées.

L'emboîtement est réalisé par introduction en force jusqu'à enclenchement c'est à dire jusqu'au positionnement des joncs portés par les gorges de la partie mâle dans la partie femelle.

Une telle solution n'est pas satisfaisante pour au moins deux raisons que la présente invention se propose de résoudre.

La première est en effet la dégradation des joints toriques lors de l'introduction de la partie mâle dans la partie femelle puisqu'ils sont positionnés en amont de façon à assurer l'étanchéité recherchée. Lors de cet emboîtement, les joints toriques peuvent être dégradés.

La seconde relève du montage lui même car les tubes une fois raccordés sont descendus en place en vue de leur mise en service et le jeu entre les deux pièces mâle et femelle du raccord laisse pénétrer des particules. Ces particules s'accumulent dans l'espace libre jusque dans les gorges des joncs, rendant très difficile le démontage de ce raccord lorsque les opérateurs ont à intervenir sur la colonne.

La présente invention est maintenant décrite en regard des dessins annexés suivant un mode de réalisation particulier, non limitatif, les différentes figures montrant :
- figure 1 : une vue schématique d'une colonne d'exhaure,
- figure 2 : une vue de détail en coupe longitudinale de la partie mâle du raccord,
- figure 3 : une vue de détail en demi coupe longitudinale de la partie femelle du raccord selon la présente invention.

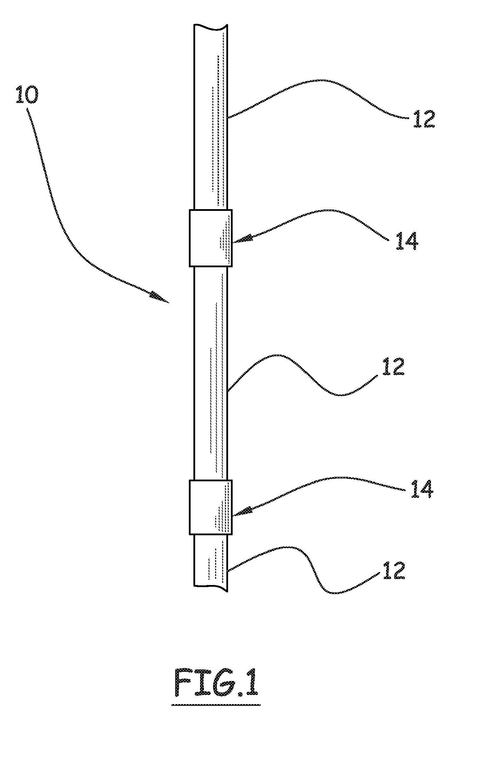

Sur la figure 1, on a représenté une colonne 10 comportant des portions de tubes 12 et des raccords 14 selon la présente invention.

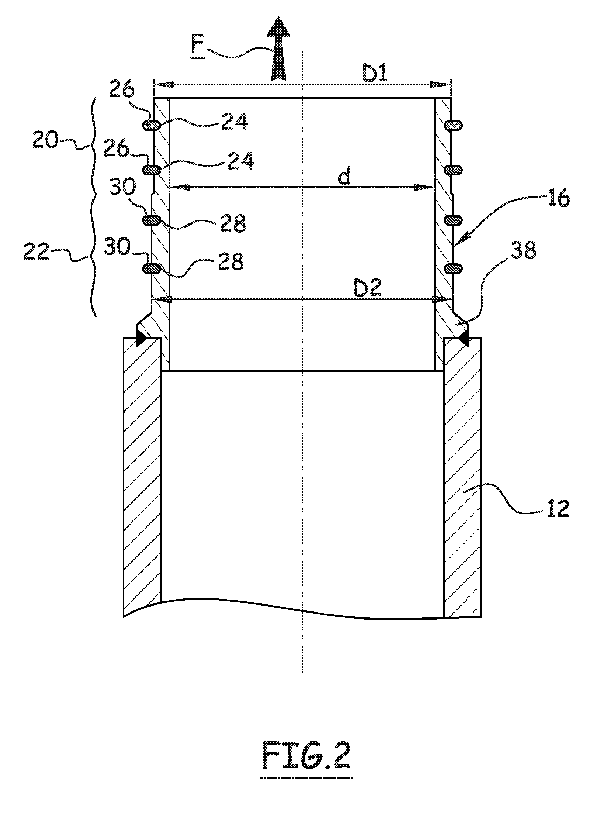

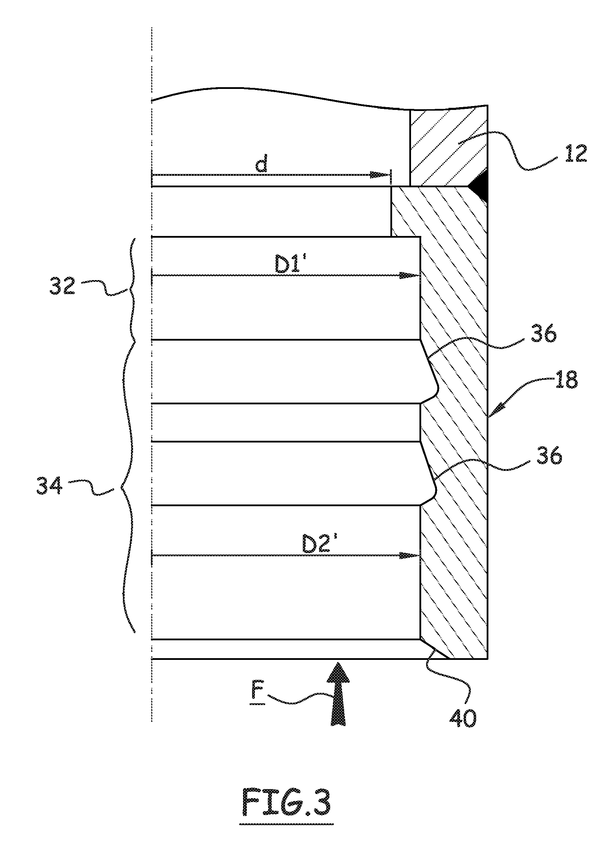

Un raccord 14 comprend comme montré sur les figures 2 et 3, une partie mâle 16 prévue pour être introduite dans une partie femelle 18, dans le sens indiqué par les flèches F sur les deux figures.

Sur la figure 2, la partie mâle comprend deux zones cylindriques 20 et 22 coaxiales de diamètre D1 et D2, D2 étant supérieur à D1.

Ces deux zones ont un même diamètre d intérieur.

Dans la zone 20, il est prévu au moins une gorge 24 ménagée dans la périphérie recevant un joint torique 26. En l'occurrence le meilleur mode de réalisation comprend deux gorges équipées.

Dans la zone 22, il est prévu au moins une gorge 28, ménagée à la périphérie et adaptée pour recevoir un jonc 30. En l'occurrence, le meilleur mode de réalisation comporte deux joncs.

Sur la figure 3, on a représenté la partie femelle 18 qui comprend une zone cylindrique 32 d'un diamètre D1' et une zone cylindrique 34 d'un diamètre D2', égal au jeu près d'introduction aux diamètres D1 et D2 de la partie mâle. Les deux zones sont également coaxiales.

Le diamètre intérieur d est identique.

Dans la zone 32, la paroi intérieure est cylindrique, plane de façon à coopérer avec les joints toriques.

Dans la zone 34, il est prévu au moins un logement 36, en l'occurrence deux logements, prévu pour recevoir la partie correspondante des joncs 30. Ces logements ont une partie inférieure à fort rayon de façon à assurer une rétention mécanique et une partie en pan inclinée.

Lors de l'emboîtement, la partie mâle est introduite dans la partie femelle en force.

On constate que les joints toriques pénètrent aisément puisque le diamètre D2 est plus important à cet effet. Au droit des logements 36, le pan incliné permet de faire de nouveau glisser les joints sans les dégrader.

Ces joints 26 viennent ensuite se comprimer contre la paroi cylindrique lisse de la zone 32 et assurer une étanchéité de qualité.

Les joncs quant à eux viennent s'immobiliser dans les logements correspondants lorsque la partie mâle est parfaitement emboîtée, venant assurer un verrouillage mécanique.

En revenant sur la figure 2, on note sur la partie mâle 16 qu'elle porte sur sa base périphérique une casquette 38 chanfreinée.

En revenant sur la figure 3, on note sur la partie femelle 18 qu'elle porte sur sa base périphérique un lamage chanfreiné 40.

Lorsque les deux parties 16 et 18 du raccord sont emboîtées, les deux parties 38 et 40 coopèrent pour éviter l'introduction de particules susceptibles de bloquer l'emboîtement lors de l'usage.

Les matériaux dans lesquels sont réalisés les tubes et les raccords peuvent être en acier, en acier inoxydable ou en matériau de synthèse, polyéthylène par exemple.

## Revendications

1. Raccord de tubes (12), notamment dans une colonne d'exhaure, comprenant une partie mâle (16), une partie femelle (18) prévue pour recevoir la partie mâle, **caractérisé en ce que** lesdites parties mâle et femelle disposent d'au moins deux zones (20,22) et (32,34) respectivement, de diamètres (D1,D2) et (D1',D2'), tels que (D1) est identique à (D1') au jeu d'introduction près, (D2) est identique à (D2') au jeu d'introduction près, avec (D2) supérieur à (D1).

2. Raccord de tubes selon la revendication 1, **caractérisé en ce que** la zone (20) reçoit au moins un joint (26) et **en ce que** la zone (32) est cylindrique lisse pour assurer l' étanchéité.

3. Raccord de tubes selon la revendication 1 ou 2, **caractérisé en ce que** la zone (22) reçoit au moins un jonc (30) et **en ce que** la zone (34) comporte au moins un logement (36) pour recevoir ledit jonc.

4. Raccord de tubes selon la revendication 3, **caractérisé en ce que** le logement (36) comprend une partie à fort rayon et un pan incliné.

5. Raccord de tubes selon l'une quelconque des revendications précédentes, **caractérisé en ce que** la partie mâle (16) porte sur sa base périphérique une casquette (38) chanfreinée et la partie femelle (18) porte sur sa base périphérique un lamage chanfreiné (40), les deux parties (38) et (40) coopèrent pour éviter l'introduction de particules.
